# EUROPEAN PATENT APPLICATION

(11) **EP 4 234 601 A1**
(43) Date of publication of application: **30.08.2023**
(21) Application number: 23157930.1
(22) Date of filing: 22.02.2023
(51) Int. Cl.: C08G 18/08, C08G 18/12, C08G 18/34, C08G 18/48, C08G 18/66, C08G 18/72, C08G 18/73, C08G 18/75, D06M 15/564, D04H 1/64, D06N 3/14

(54) **METHOD OF PRODUCING A LEATHER-LIKE MATERIAL**

(30) Priority: 24.02.2022 IT 202200003428
(71) Applicant: Lamberti SPA, 21041 Albizzate (VA) (IT)
(72) Inventor: LUONI, Marco, 21052 Busto Arsizio (VA) (IT); COSTA, Gabriele, 20144 Milano (IT); CAPRIFOGLIO, Riccardo, 21013 Gallarate (VA) (IT); DE LUCA, Mariuccia, 21015 Lonate Pozzolo (VA) (IT); COGET, Karine, 21019 Somma Lombardo (VA) (IT); FUMAGALLI, Stefano, 21040 Carnago (VA) (IT); VETRI, Domenico, 21013 Gallarate (VA) (IT)
(74) Representative: Giaroni, Paola

(57) **Abstract**

Method of producing a leather-like material comprising the steps of: A) impregnating a fibrous substrate with a water-based polyurethane composition containing from 12 to 45 % by weight (wt%) a carboxylated polyether diol-based polyurethane devoid of polyoxyethylene groups; B) coagulating the polyurethane composition by immersing at ambient temperature the impregnated fibrous substrate in a coagulation bath containing a water-soluble organic hydroxyacid; C) washing the fibrous substrate bearing the coagulated polyurethane; and D) drying the washed fibrous substrate bearing the coagulated polyurethane to obtain the leather -like material.

## Description

### TECHNICAL FIELD

The present invention relates to a method of producing a leather-like material excellent in texture and embossability by coagulating a water-based polyurethane composition, containing a carboxylated polyether diol-based polyurethane devoid of polyoxyethylene groups and to the leather-like material produced according to said method.

### BACKGROUND OF THE INVENTION

Natural leather is nowadays more than ever under discussion because of the concern about greenhouse gas emission of cattle breeding, the sustainability of leather production, and due to the pressing demand of preserving animal welfare and lives. Leather-like materials used as substitutes for natural leather include artificial leather composed of resin and non-woven, woven or knitted fabric.

Artificial leather is widely used in clothing articles, shoes, bags, fashion materials, furniture and interior material of vehicles. Polyurethane resins are often the resins of choice for manufacturing these leather-like materials.

Coagulation and transfer coating are by far the most common methods used for producing leather-like materials. The coagulation process allows the production of synthetic leather with breathable and aesthetic effects that make it very similar to authentic leather. Unlike the transfer coating which is finally a dry process, coagulation is a wet process. In the majority of the coagulation processes, the support is first impregnated with polyurethane dissolved in dimethylformamide (DMF), and, after that, the polyurethane is coagulated with water. Several washing steps conclude the process.

This process has strong environmental impact, in terms of energy and water consumption and potential pollution. DMF, in fact, is a CMR solvent, i.e. a solvent classified as carcinogenic, mutagenic, or toxic for reproduction. DMF shall be duly separated from water and recycled. In fact, DMF was proved harmful for both environment and workers' health and prone to produce explosive mixtures with air. In the last years, the coagulation production of leather-like fabrics has been improved through the development of processes of coagulation of aqueous polyurethane compositions that replace the highly polluting process involving the use of DMF based resins.

Most of these DMF-free processes obtain the coagulation of the aqueous polyurethane resin by an energy consuming thermal treatment; others, fewer, by critical destabilisation of the polyurethane dispersion by salts addition or pH change. Among the patents dealing with synthetic leather preparation by DMF-free processes involving polyurethane coagulation we mention:
- US 4,171,391, the precursor patent, disclosing a method of preparing a leather like material comprising: (a) impregnating at least a portion of a porous sheet material with an aqueous dispersion of an ionic polyurethane polymer; (b) ionically coagulating said polyurethane polymer; and (c) drying the sheet to form a composite sheet material;
- JP 2004/143641, where the leather-like sheet material is made by thermal coagulation of an aqueous dispersion of a polyurethane resin composed of an anionic polyurethane resin dispersion further containing two kinds of nonionic surfactants and an inorganic salt;

- WO 02/33001A1, which relates to a method for preparing a synthetic leather by coagulating on a substrate a composition including an anionic or cationic aqueous polyurethane dispersion, a water repellent, an emulsifier, an antifoamer and an inorganic filler;
- US 6,794,446, which discloses water-borne urethane resin compositions comprising (1) a water-borne urethane resin having a heat-sensitive coagulation temperature of 40 to 90° C and (2) an associative type thickener;
- WO 2021/084922, which relates to a composition containing a urethane resin that employs a polycarbonate diol (A), a nonionic emulsifier (B), and water (C) and to a leather sheet made by coagulating the urethane resin composition. The urethane resin (A) and the nonionic emulsifier (B) both preferably have an oxyethylene group and an oxypropylene group;
- WO 2020/174899, which discloses aqueou dispersion of a urethane resin (X) that contains an oxyethylene structure and an anionic emulsifier, no organic solvent being included during the urethane resin production process, and a leather-like sheet prepared by coagulation of the aqueous dispersion;
- EP 3 677 722, which describes a method for manufacturing synthetic leather in which, after obtaining a thickened liquid by adding a substantially non-ethoxylated thickening agent (B) to an aqueous anionic urethane resin composition (A), the thickened liquid is coated on a base and coagulated with a coagulating agent (C) containing a metal salt, calcium nitrate being the preferred metal salt;
- EP 3 029 110, which relates to a leather-like sheet produced by impregnating a fiber base with an aqueous, carboxylated, aromatic, urethane resin composition and subsequently performing thermal coagulation.

Unfortunately, the quality of manufactured synthetic leathers, made by chemically coagulating polyurethane dispersions in a DMF-free process, when tested according to textile standards, is often not comparable to the one obtained by means of conventional DMF processes, or even by thermal coagulation.

It was therefore the object of the present invention to develop a DMF-free method of producing leather-like material, particularly excellent in texture and embossability, by coagulating a water-based polyurethane composition without heat or other energy application.

The reduction of water waste in the whole process is a further goal of the present invention.

It is also desirable to enhance the percentage of renewable bio-based and ready biodegradable raw materials that make up the coagulated film and enter in the coagulation process.

It was therefore another object of the present invention to develop a coagulation method for leather-like material production whose ingredients can be based on raw materials of natural plant or animal origin and are free or almost free of polyethoxylated components, either in the polyurethane synthesis or in the additional ingredients of the coagulating bath.

Surprisingly, these objects can be achieved by a method of producing a leather-like material comprising the step of impregnating a fibrous substrate with a water-based composition containing a polyetherdiol-based carboxylated polyurethane devoid of polyoxyethylene groups and the step of coagulating the polyurethane composition by immersing the impregnated fibrous substrate in a bath containing a water soluble organic hydroxy-acid.

The leather-like materials so obtained show excellent physical properties such as softness, flexibility and touch. They also show good color fixing properties leading to excellent printing quality (color saturation, coalescence and low bleeding), in particular in the field of ink-jet printing.

In some embodiments of the method of the invention, the impregnation bath, water-based polyurethane composition and coagulation bath are all devoid of organic solvents and emulsifiers that could enhance the COD and BOD (chemical end biochemical oxygen) demand of the water waste and could impair the water resistance of the resulting material.

In a specially preferred embodiment, the impregnation bath, coating composition and coagulation bath of the method are all devoid of volatile organic compounds that differently could render the air of the working place unhealthy.

### DESCRIPTION OFTHE INVENTION

It is therefore an object of the present invention a method of producing a leather-like material comprising the steps of:
A) impregnating a fibrous substrate with a water-based composition containing from 12 to 45 % by weight (wt%) of a carboxylated polyether diol-based polyurethane devoid of polyoxyethylene groups;
B) coagulating the polyurethane composition by immersing at ambient temperature the impregnated fibrous substrate in a coagulation bath containing a water soluble organic hydroxy-acid;
C) washing the fibrous substrate bearing the coagulated polyurethane; and
D) drying the washed fibrous substrate bearing the coagulated polyurethane to obtain the leather -like material;
wherein the carboxylated polyether diol-based polyurethane devoid of polyoxyethylene groups is obtained by reaction of at least the following components:
a) from 10 to 40 wt% of at least one organic diisocyanate,
b) from 50 to 85 wt% of at least one polyether diol having a molecular weight from 500 to 3000 g/mol,
c) from 3.3 to 7 wt% of at least one diol having at least one carboxylic or carboxylate group and molecular weight from 100 to 300 g/mol,
d) from 0 to 5% of one or more polymeric diol different from the diol b) having a molecular weight from 500 to 3000 g/mol,
e) from 0 to 3 wt% of one or more polyol having at least 3 hydroxy groups,
f) from 0 to 3 wt% of a polyisocyanate having average functionality above 2,
g) from 0 to 12 wt% of a polyamine chain extender,
in such proportions that the molar ratio between the sum of the isocyanate groups of
a) and f) and the sum of the hydroxy groups of b)-e) is between 1.25 and 1.9 and that
b) represents at least 90% by weight of the sum of the components b)-e).

Another object of the invention is the leather-like material produced according to the above method.

### DEFINITIONS

In the present text, the expressions "leather-like material" and "artificial leather" are indifferently used to describe synthetic composite materials imitating the optical appearance the technical properties of leather (breathability, haptics, water vapour permeability).

By "carboxylated polyurethane", we mean a polyurethane in which at least one of the polyols (i.e. of its polyol components) is a polyol containing a carboxylic group, in acid or salt form.

The term "polyol" here means a compound having two or more hydroxyl groups.

By "polyether diol-based polyurethane", we mean a polyurethane in which at least 90 wt% of the polyol components is made of polyether diols.

By "polyester diol-based polyurethane", we mean a polyurethane in which at least 90 wt% of the polyol components is made of polyester diols.

The expression "molecular weight" used in this text, when referred to polymeric diols, polyester diols, polyether diols and polymeric polyols, is the molecular weight (MW) in g/mol calculated from their Hydroxyl Number, determined according to standard test method ASTM D4274-11.

By "polyoxyethylene groups", we mean a group having formula -(CH₂CH₂O)ₙ-, where n≥2.

By "polyurethane devoid of polyoxyethylene groups", we mean a polyurethane in which at most 5 wt% of the polyol components is made of polyoxyethylene groups. By "polyurethane completely devoid of polyoxyethylene groups", we mean a polyurethane that does not contain any polyoxyethylene group.

By "ambient temperature", we mean the typical temperature present in industrial plants, which can vary, for example, between 15 and 40 °C.

By "bio-based", we mean that the component or the ingredient is produced using substances derived from living organisms, such as microorganisms, plants or vegetables and animals.

### DETAILED DESCRIPTION OFTHE INVENTION

The method of the invention is directed to the manufacture of leather-like material for any leather or synthetic leather applications, such as footwear, gloves, handbags, belts, garments, furniture upholstery and automotive upholstery.

### A) impregnation

The fibrous substrate that can be used in the method of the invention may be a woven or nonwoven or knitted fabric or the like. In a preferred embodiment, the fibrous substrate is a woven fabric. In another preferred embodiment, the fibrous substrate is a nonwoven fabric.

The fibrous substrate may be made of any fibrous material, either of synthetic or semisynthetic or natural material, but preferably of natural material.

Examples of synthetic fibrous materials are polyester fibers, nylon fibers, acrylic fibers, polyurethane fibers, acetate fibers and polylactic acid fibers Examples of semisynthetic fibrous materials are rayon and viscose.

Although synthetic microfibers (< 1 denier fibers) might be used as the fibrous material, normally sized fibrous materials (> 1 denier fibers) are mostly preferred. Examples of natural materials are cotton, wool, hemp and silk.

The fibrous material may be made of blends of different fibrous materials.

In a preferred embodiment, the fibrous substrate is made, at least partially, of recycled materials, in particular of recycled natural materials.

The fibrous substrate is typically in sheets having thickness comprised 40 to 200 g/m².

However, the thickness of the substrate is not particularly critical as long as a sufficient section of the substrate can be impregnated or a sufficient layer of the polyurethanes can be adhered to it.

The fibrous substrate can be impregnated with the water-based polyurethane composition by any suitable method known in the art, such as dipping/padding, knife-over-air or knife- over-roller coating, spraying or combinations of these methods. This impregnation step is performed at ambient temperature with conventional apparatus. Impregnation by dipping is preferred.

Especially when impregnation is performed by dipping, the possible excess of water-based polyurethane composition may be removed by passing the impregnated fibrous substrate through squeezing rollers.

The water-based polyurethane composition that is used to impregnate the fibrous substrate contains (i) from 12 to 45 wt%, preferably from 17 to 35 wt% of a polyether diol-based carboxylated polyurethane (UPET) and, optionally, (ii) a polyester diol-based carboxylated polyurethane (UPES), (i) and (ii) being both carboxylated polyurethanes devoid of polyoxyethylene groups.

If it were used alone, the polyester diol-based polyurethanes would show an unsatisfactory behaviour in the coagulation step and/or impart to the final product lower resistance to aging and light, but, when used in a minor amount together with the UPET, they allow to improve the touch, the softness and the embossability of the leather-like material of the invention.

In a preferred embodiment, the water-based polyurethane composition of the invention contains both a UPET and a UPES and the ratio by weight between UPES and UPET may range between 1:10 and 1:1.5, more preferably between 1:6 and 1:2. The UPET can be obtained by reaction of at least the following components:
a) from 10 to 40 wt%, preferably from 15 to 35 wt%, of at least one organic diisocyanate,
b) from 50 to 85 wt%, preferably from 60 to 80 wt%, of at least one polyether diol having a molecular weight from 500 to 3000 g/mol,
c) from 3.3 to 7 wt% of at least one diol having at least one carboxylic or carboxylate group and molecular weight from 100 to 300 g/mol,
d) from 0 to 5 wt% of one or more polymeric diol different from the diol b) having a molecular weight from 500 to 3000 g/mol,
e) from 0 to 3 wt% of one or more polyol having at least 3 hydroxy groups,
f) from 0 to 3 wt% of a polyisocyanate having average functionality above 2,
g) from 0 to 12 wt%, preferably from 2 to 9 wt%, of a polyamine chain extender, in such proportions that the molar ratio between the sum of the isocyanate groups of a) and f) and the sum of the hydroxy groups of b)-e) is between 1.25 and 1.9, preferably from 1.35 and 1. 8, more preferably between 1.35 and 1.7 and that b) represents at least 90% by weight of the sum of the components b)-e).

The UPES can obtained by reaction of at least the following components:
a') from 10 to 50 wt%, preferably from 15 to 35 wt%, of at least one organic diisocyanate,
b') from 40 to 85 wt%, preferably from 60 to 80 wt%, of at least one polyester diol having a molecular weight from 500 to 3000 g/mol,
c') from 3 to 9 wt%, preferably from 3.5 to 7 wt%, of at least one diol having at least one carboxylic or carboxylate group and molecular weight from 100 to 300 g/mol,
d') from 0 to 5 wt% of one or more polymeric diol different from the diol b') having a molecular weight from 500 to 3000 g/mol,
e') from 0 to 3 wt% of one or more polyol having at least 3 hydroxy groups,
f') from 0 to 3 wt% of a polyisocyanate having average functionality above 2,
g') from 0 to 12 wt%, preferably from 2 to 9 wt%, of a polyamine chain extender, in such proportions that the molar ratio between the sum of the isocyanate groups of a') and f') and the sum of the hydroxy groups of b')-e') is between 1.0 and 2.0, preferably between 1.5 and 1.9, and that b') represents at least 90% by weight of the sum of the components b')-e').

Preferably, in the UPET and the UPES at most 1 wt% of the polyol components is made of polyoxyethylene groups. Most preferably, the UPET and the UPES do not are completely devoid of polyoxyethylene groups.

In a preferred embodiment, the components of the UPET and the UPES are, at least partially, more preferably by at least 30 wt%, even more preferably by at least 50wt%, bio-based.

Examples of components a) and a') include 1,6-hexamethylene diisocyanate (HDI), 2,4,4 trimethyl-1,6-hexamethylene diisocyanate (TMDI), ethylene diisocyanate, isophorone diisocyanate (IPDI), cyclohexane-1,4-diisocyanate, 4,4'-dicyclohexylmethane diisocyanate (H₁₂MDI), 1,5 pentane diisocyanate (PDI), p-xylylene diisocyanate, p- and m-tetramethylxylene diisocyanate (p-TMXDI and m-TMXDI), 1,4-phenylene diisocyanate, hydrogenated 2,4-toluene diisocyanate, hydrogenated 2,6-toluene diisocyanate, 4,4'-diphenylmethane diisocyanate (4,4'-MDI). Preferred diisocyanates a) and a') are isophorone diisocyanate, 4,4'-dicyclohexyl-methane-diisocyanate, 1,6-hexamethylene diisocyanate, 1,5-pentane diisocyanate and mixtures thereof. More preferably, the diisocyanate a) and a') is isophoronediisocyanate, 1,6-hexamethylene diisocyanate or a mixture thereof. Most preferably, the diisocyanate a) and a') is isophoronediisocyanate,

Bio-based polyisocyanates, such as bio-based 1,5-pentane diisocyanate, are other examples of components a) and a') and are particularly preferred.

Examples of suitable polyether diols b) include products obtained by the polymerization of propylene oxide, 1,3-propandiol, 1,2-, 2,3- and 1,4-butylene oxide, 3-methyltetrahydrofuran, and mixture thereof. The preferred polyether diols are polyoxypropylene diol, poly(1,3-propandiol) and poly(tetramethylene glycol); bio-based polyether diols, such as poly(1,3-propandiol) and poly(tetramethylene glycol) being the most preferred. Especially useful polyether diols have molecular weights comprised between about 1000 g/mol and about 2000 g/mol.

Even more preferably, the polyether diols are biobased poly(1,3-propandiol) with molecular weight between 1000 and 2000 g/mol, poly(tetramethylene glycol) with molecular weight 2000 g/mol, polyoxypropylene diol with molecular weight 2000 g/mol, or mixtures thereof. Mixtures of polyether diols having molecular weights of 1000 g/mol and 2000 g/mol may be used to modulate the stiffness of the coagulated polyurethane.

Examples of suitable polyester diols b') include those obtained, for example, by reacting aliphatic, aromatic or cycloaliphatic dicarboxylic acids, or possibly the corresponding anhydrides, with diols, optionally in the presence of known esterification catalysts.

Examples of suitable dicarboxylic acids include adipic, glutaric, pimelic, suberic, nonane dicarboxylic, decane dicarboxylic, succinic, maleic, itaconic acid, sebacic, azelaic, terephthalic, isophthalic, o-phthalic, tetrahydrophthalic, hexahydrophthalic, trimellitic, 1,4-cyclohexane dicarboxylic acid; examples of suitable anhydride include succinic, o-phthalic and trimellitic anhydride; various commercially available dimeric fatty acids in saturated (hydrogenated) or unsaturated form may also be used as the dicarboxylic acid.

Bio-based dicarboxylic acids, such as bio-based malonic acid, succinic acid, glutaric acid, adipic acid, itaconic acid, pimelic acid, suberic acid, azelaic acid, sebacic acid, undecanedioic acid, furan-2,5-dicarboxylic acid, dimer acids and diacids obtained from methatesis process of insaturated fatty acids, and the like, are other examples of suitable dicarboxylic acids and are preferred.

Bio-based adipic acid, sebacic acid, azelaic acid and itaconic acid are the most preferred dicarboxylic acid.

Examples of suitable diols for the preparation of the polyester diols are ethanediol, di-, tri- tetraethylene glycol, 1,2 propanediol, di-, tri-, tetra-propylene glycol, 1,3-propanediol, 1,4-butanediol, 1,3-butanediol, 2,3-butanediol, 1,6-hexanediol, 1,5-pentanediol, 2,2-dimethyl-1,3-propanediol (neopentylglycol), 1,4-dihydroxy cyclohexane, 1,8-octanediol, 1,10-decanediol, 1,12-dodecanediol, 2,2,4- and/or 2,4,4-trimethyl-1,3-pentanediol and mixtures thereof, ethanediol, di-, tri- tetraethylene glycol being optionally used only in the limited amount compatible with the preparation of a polyurethane devoid of polyoxyethylene groups.

Bio-based diols, such as bio based 1,3-propanediol, 1,4 butanediol, 1,5-pentanediol, and 1,6-hexanediol are other examples of suitable diols.

Other useful polyester diols are those obtainable from diol-initiated polymerization of hydroxy carboxylic acids containing from 2 to 26, and preferably from 4 to 12, carbon atoms or a lactone thereof. The hydroxy carboxylic acids may be saturated or unsaturated. Examples of suitable hydroxy carboxylic acids are glycolic acid, lactic acid, 5-hydroxyvaleric acid, 6-hydroxy caproic acid, ricinoleic acid, 12-hydroxy stearic acid, 12-hydroxydodecanoic acid, 5-hydroxydodecanoic acid, 5-hydroxydecanoic acid and 4-hydroxydecanoic acid.

Examples of suitable lactones are β-propiolactone and, optionally C₁-C₆-alkyl substituted, δ-valerolactone and ε-caprolactone, such as β-methyl-δ-valerolactone. Polyester diols obtained from adipic, sebacic, itaconic, azelaic acid and 1,6 hexandiol 2,2-dimethylpropane-1,3-diol and 1,4 butandiol are especially preferred.

The diols c) and c') are preferably dihydroxy alkanoic acids such as 2,2-dimethylol propionic acid (DMPA) or 2,2-dimethylol butanoic acid (DMBA) in salt form in the water based polyurethane composition. DM PA is the preferred diol c) and c'). When DMPA is the diol with carboxylic or carboxylate group c), its amount is preferably from 3.3 to 6.0 wt%, more preferably from 3.5 to 4.0 wt%. The base used to neutralise the carboxylic groups is preferably ammonia, an amine or an inorganic base. Suitable amines include tertiary amines, for example trimethylamine, triethylamine, N,N-diethylethanolamine or N,N-dimethylethanolamine. Suitable inorganic bases include alkali hydroxides and carbonates, for example lithium hydroxide, sodium hydroxide, or potassium hydroxide. The use of inorganic bases is preferred when the presence of VOC (volatile organic compounds) in the whole process is to be avoided.

The amount of the diols c), c') and their molecular weight determines the milliequivalents (meq) of groups COOH and COO⁻ per 100 g of polyurethane.

The polymeric diol d) can be a polycarbonate diol or a polyester diol having a number average molecular weight of 500 to 3000, preferably from 500 to 2000.

The polycarbonate diols are obtained, for example, by reacting carbonic acid derivatives, such as for example diphenyl carbonate or phosgene, and polyols. Suitable polyols include the commercially available diols, such as those mentioned above or mixtures of these diols. Examples of suitable triols are glycerol and trimethylol propane. The preferred polyols are diols and 1,6-hexanediol is particularly preferred.

Suitable polyester diols are those mentioned above as polyester diols b').

The polymeric diol d') can be a polycarbonate diol, such as those mentioned above, or a polyether diol.

Polyether diols suitable as component d') include products obtained by the polymerisation of cyclic oxides, for example ethylene oxide, propylene oxide, butylene oxide, tetrahydrofuran, and mixture thereof, polyether diols obtained from ethylene oxide being optionally used only in the limited amount compatible with the preparation of a polyurethane devoid of polyoxyethylene groups. Especially useful polyether diols include polyoxypropylene diol and poly(tetramethylene glycol). The preferred polyether diol is poly(tetramethylene glycol).

Examples of polyols e) and e') are glycerol, trimethylol ethane, trimethylol propane and its derivatives, such as trifunctional polyalkylene glycol started on trimethylol propane. Suitable polyols having more than three hydroxyl groups are pentaerythritol, sorbitol, and the etherification products of the above polyols, such as di-(trimethylol propane) and di-, tri- and tetra-pentaerythritol. Preferably, use is made of compounds having from 3 to 12 carbon atoms, e.g. glycerol, trimethylol propane and pentaerythritol.

The polyisociantes f) and f') are chosen among organic polyisocyanate having average functionality above 2, preferably from 2.3 and 4. They can be aliphatic or cycloaliphatic or aromatic polyisocyanate. Examples of suitable polyisocyanates are hexamethylene diisocyanate isocyanurate, bio-based 1,5-pentane diisocyanate isocyanurate, hexamethylene diisocyanate biuret, isophorone diisocyanate isocyanurate and isophoronediisocyanate biuret. Preferably, polyisociantes f) and f') are not used in the preparation of the prepolymer.

The polyamine chain extender g) and g') ca be chosen among non-ionic diamines having at least 2 active hydrogens toward the NCO group. Suitable non-ionic diamines are hydrazine, ethylene diamine, propylene diamines, piperazine, 1,5-pentane diamine, 1,6-hexane diamine, isophorone diamine, diethylene triamine and the like. Hydrazine and ethylene diamine being the preferred non-ionic diamines. The polyamine chain extender is preferably the only component of the UPET and the UPES that contains amino groups.

Preferably, the carboxylated polyether diol-based polyurethane and the carboxylated polyester diol-based polyurethane are respectively obtained by reaction of only the components a)-g) and a')-g') described above, more preferably by reaction of only the components a)-c) and g) and a')-c') and g'). They may be prepared by any suitable method such as those well known in the art.

For example, the carboxylated polyurethanes of the invention can be obtained by a process, which comprises the steps i) of preparing a prepolymer by reacting from a) to f) or a') to f') and ii) chain extending the prepolymer in water using the polyamine g).

In the process, step i) is preferably performed at temperature between 40 and 110 °C.

A catalyst may be used to accelerate the reaction. When the addition of an organic solvent is required by the viscosity of the prepolymer or of the reaction mixture of step i), low boiling point solvents such as methyl ethyl ketone, ethyl acetate and acetone can be used in the preparation of the prepolymer. The low boiling solvent, if present, is preferably removed by evaporation after dispersion in water of the prepolymer.

When the diols c) or c') are used in acid form, the prepolymer obtained at the end of stage i) is normally neutralized. Advantageously, these diols are neutralized before the reaction of step i) takes place. The neutralization can also be carried out during the dispersion in water of the prepolymer (step ii).

Step ii) of the process of the invention is preferably carried out percolating the prepolymer in water under mechanical stirring. The chain extender may be added after dispersion of the prepolymer in water or in the dispersion water, to provide the chain extended polyurethane. The temperature of this step is preferably maintained below 40 °C.

The water-based composition of the invention may also contain additives widely used in the field, such as thickeners, fillers, pore-forming agents, antioxidants, light stabilizers, heat stabilizer, UV absorbers, surfactants, biocides, dyes, pigments, and coagulation regulators.

Thickeners enhance the ability of the dispersion to be retained in the textile prior to coagulation. Examples of useful thickeners include methyl cellulose ethers, alkali swellable thickeners (e.g., sodium or ammonium neutralized acrylic acid polymers), hydrophobically modified alkali swellable thickeners (e.g., hydrophobically modified acrylic acid copolymers) and associative thickeners (e.g., hydrophobically modified ethylene-oxide-based urethane block copolymers). Preferably, the rheological modifier is a water- soluble thickener that is not ionized. Preferably, the rheological modifier is a methylcellulose ether. Typically, the amount of thickener is comprised between 0.1% and 5% by weight, preferably between 0.5% and 2% by weight, based on the total weight of the water-based composition.

Generally, the viscosity of the water-based compositions is from about 5000 to about 15,000 mPa_{*}s, preferably from about 7,000 to about 13,000 mPa_{*}s, more preferably from about 8,000 to about 12,000 mPa.s (Brookfield viscosity).

Examples of suitable fillers are mineral fillers such as silica, natural fibers such as cellulose micro-fibers and polymeric beads such as polyurethane and acrylic-based beads. It is particularly preferable to use cellulose micro-fibers, such as Arbocel^{®} products commercialized by JRS, or hydroxyapatite powders, both of synthetic or natural origin.

The fillers are typically used in an amount from 0.5% to 30 % by weight and preferably from 3% to 10% by weight, based on the total weight of the water-based composition. Other additives known in the art may be added to the polyurethane dispersion to impart some desired characteristic such as enhanced softness or improved ultraviolet stability.

Generally, the water-based composition of the invention has a viscosity that easily impregnates the textile while also being advantageously retained within the textile.

### B) Coagulation

After the textile is impregnated with the water-based polyurethane composition, the polyurethane are coagulated by exposing the impregnated textile to water containing from 5 to 12% of a hydroxy-acid for a coagulation time sufficient to coagulate the polymers.

Useful hydroxy-acids are especially alpha-hydroxy-acids, which include citric acid (found in citrus fruits), glycolic acid (found in sugar cane), lactic acid (found in sour milk and tomato juice), malic acid (found in apples), tartaric acid (found in grapes). Citric acid is particularly preferred.

The textile may be exposed to an aqueous solution of the hydroxy-acid by any suitable method. Preferably, the impregnated textile is immersed in a water bath having the dissolved coagulant for a time sufficient to coagulate the polyurethane in the textile. For example, sufficiently coagulated is when further coagulation results in only about at most 10% by weight more polyurethane in the textile.

Generally, the coagulation time of about 180 seconds is sufficient to coagulate the polyurethane at typical work conditions.

### C) Washing step

After coagulation, the impregnated textile may be washed/leached, for example with water, to remove excess salts/acids and other compounds such as thickeners. Prior to the washing of the textile, excess liquid may be removed, for example, by passing the textile through padding machine as described previously. The textile then may be washed in any suitable manner such as immersing it in a water bath for an appropriate time, such as for from some seconds to about 20 minutes.

### D) Drying step

Finally, the washed, coagulated, impregnated textile again may have excess washing liquid removed by padding machine, followed by drying the leather-like material. The drying may be performed at any suitable temperature and time so long as the temperature is not so great to damage the leather-like material. Generally, the temperature is from about 50 to about 200 °C, preferably from about 75 to about 150°C.

According to an advantageous embodiment of the method, the steps A), B), C) and D) take place in a continuous production apparatus.

In the continuous production apparatus, the drying step may take place at a speed of 2-8 m/min, preferably at a speed of 4-8 m/min.

Most advantageously, steps A)-D) are performed only once on the fibrous substrate, The method of producing a leather-like material of the invention optionally comprises and additional step E) that takes place after step D) and consists in the application of a finishing coating, typically based on film forming polyurethanes and typically applied by transfer coating.

### EXAMPLES

In the Examples the following materials were used:
IPDI = Isophorone Diisocyanate;
HDI = Hexamethylene Diisocyanate;
H₁₂MDI = 4,4'-Dicyclohexyl Methane Diisocyanate;
TMDI = 2,4,4-Trimethyl-1,6-Hexamethylene Diisocyanate;
PTMEG 1000 = Polyether Diol from tetrahydrofurane having a molecular weight of about 1000 g/mol;
PTMEG 2000 = Polyether Diol from tetrahydrofurane having a molecular weight of about 2000 g/mol;
PPG 2000 = Polypropylene Glycol having a molecular weight of about 2000 g/mol; PDO 2000 = Poly(1,3-Propane Diol) (bio-based) having a molecular weight of about 2000 g/mol;
PC 1000 = Polycarbonate Diol from 1,6-hexanediol having a molecular weight of about 1,000 g/mol;
PES 2000 = Polyester Diol from neopentyl glycol and adipic acid having a molecular weight of about 2000 g/mol;
PDO 1000 = Poly(1,3-Propane Diol) (bio-based) having a molecular weight of about 1000 g/mol;
PTMEG BIO = Bio-based Polyether Diol from 1,4-butan diol having a molecular weight of about 1000 g/mol;
ETHOX = TEGOMER^{®} D 3403 (Evonik Corp.)
DMPA= Dimethylol Propionic Acid;
TEA = Triethyl Amine;
EDA= Ethylene Diamine;
HA= Hydrazine;
DMM = Dipropylene Glycol Dimethyl Ether
Thickener = Viscolam PS 170 AiR (Lamberti S.p.A.);
Filler = Arbocel^{®} BE 600-30 (JRS Rettenmaier GMBH);
Wetting Agent = BYK^{®} 345 (BYK-Chemie GmbH);
Pigment = Neo White LP2/S (Lamberti S.p.A.);
Defoamer = Defomex SE 47 (Lamberti S.p.A.).

### POLYURETHANE PREPARATION - PU 1

131 g of PTMEG 2000, 70 g of PPG 2000 and 10.0 g of DMPA are loaded in a reactor equipped with thermometer, stirrer and condenser, under nitrogen atmosphere and at room temperature. 62 g of IPDI are added under stirring after approximately 10 minutes of homogenization of the mixture at 40 °C.

The reaction is carried out at 80 °C, until the content of NCO groups in the prepolymer is 2.2%.

The content of the residual isocyanate groups has been determined in this and all the other examples according to the standard method ASTM D2572.

Once reached the required value of NCO groups the prepolymer is cooled down. At approximately 75 °C, 7.5 g of neutralizing agent TEA are added under stirring.

After about 10 minutes, the prepolymer is dispersed in 646 g of demineralized water under strong stirring and temperature below 35°C.

The extension is carried out adding 5.8 g of ethylene diamine at temperature below 35°C. The obtained polyurethane dispersion is then filtered with a 300 µm canvas and brought to a dry content of about 30 wt%.

### POLYURETHANE PREPARATION - PU 2-11

The polyurethanes PU 2-11 were prepared following the same procedure. In some case, the polyurethanes were prepared in the presence of DMM, as solvent (between 3 and 8 wt% of the final product). The components and the wt% of diisocyanates, DMPA and diol (based on the weight of the prepolymer), the NCO/OH ratio and the wt% of chain extender (based on the total weight of the polymer), which were used for the preparation of the polyurethanes PU 1-11, are reported in Table 1-4.

**Table 1**

| | NCO/OH | dNCO | % dNCO | % DMPA | % Diol | % Ext. | PTMEG 1000 | PPG 2000 | PTMEG 2000 | % Solv |
|---|---|---|---|---|---|---|---|---|---|---|
| PU 1 | 1.5 | IPDI | 22.9 | 3.7 | 73.4 | 2.1* | - | 35 | 65 | - |
| PU2 | 1.4 | HDI/ IPDI*** | 24.8 | 3.8 | 71.4 | 5.3** | 100 | - | - | 3 |
| PU 3 | 1.9 | IPDI | 26.7 | 3.8 | 69.5 | 9.3** | - | 50 | 50 | - |
| PU 4 | 1.5 | IPDI | 30.2 | 3.3 | 66.5 | 7.8 ** | 100 | - | - | 5 |

| | | | | | | | | | | |
|---|---|---|---|---|---|---|---|---|---|---|
| * EDA ** HA ***weight ratio=1.8/1 | | | | | | | | | | |

**Table 2**

| | NCO/OH | dNCO | % dNCO | % DMPA | % Diol | % Ext. | PPG 2000 | PES 2000 | PC 1000 | % Solv |
|---|---|---|---|---|---|---|---|---|---|---|
| PU5 | 2.0 | H₁₂MDI | 47.72 | 6.0 | 46.2 | 14.6** | - | - | 100 | 8 |
| PU6 | 1.8 | IPDI | 23.7 | 3.2 | 73.1 | 2.2* | - | 100 | - | - |
| PU7 | 1.8 | IPDI | 25.2 | 3.4 | 71.4 | 11.6** | 100 | - | - | - |

| | | | | | | | | | | |
|---|---|---|---|---|---|---|---|---|---|---|
| * EDA ** HA | | | | | | | | | | |

**Table 3**

| | NCO/ OH | dNCO | % dNCO | % DMPA | % Diol | % Ext. | ETHOX | PPG 2000 | PDO 2000 |
|---|---|---|---|---|---|---|---|---|---|
| PU 8 | 1.8 | IPDI/ TMDI**** | 20.5 | 0.9 | 78.6 | 7.6** | 20 | 80 | - |
| PU 9 | 1.8 | IPDI/ TMDI**** | 20.5 | 0.9 | 78.6 | 6.8** | 20 | - | 80 |

| | | | | | | | | | |
|---|---|---|---|---|---|---|---|---|---|
| ** HA **** weight ratio=20/1 | | | | | | | | | |

**Table 4**

| | NCO/OH | dNCO | %dNCO | %DMPA | %Diol | %Ext. | PDO 1000 | PTMEG BIO | % Solv |
|---|---|---|---|---|---|---|---|---|---|
| PU 10 | 1.4 | HDI/IPDI *** | 24.8 | 3.7 | 71.4 | 5.6** | 100 | | 3 |
| PU 11 | 1.4 | HDI/IPDI *** | 24.8 | 3.8 | 71.4 | 5.3** | - | 100 | 3 |

| | | | | | | | | | |
|---|---|---|---|---|---|---|---|---|---|
| ** HA *** weight ratio=1.8/1 | | | | | | | | | |

### LEATHER-LIKE MATERIAL PREPARATION

The polyurethanes PU 1-11 were used to prepare water-based compositions of Examples 1-11 according to the recipe of Table 5.

The compositions were prepared by mixing the ingredients under mechanical stirring following the order shown in Table 5.

**Table 5**

| Ingredient | %wt |
|---|---|
| Polyurethane | 68.2 |
| Filler | 6.8 |
| Pigment | 3 |
| Defoamer | 0.3 |
| Wetting Agent | 0.3 |
| Thickener | To about 10,000 mPa_{*}s |
| Water | To 100 |

A 1.2 mm thick film of the water-based compositions was applied on a fluorine-treated lycra-based fabric using a coating device with roller knife (Mathis AG).

Coagulation was carried out by immersion of the coated fabric in a citric acid solution (8 % by weight) for 3 minutes.

After washing with demineralized water and squeezing in a foulard set at 2 bars, the composite specimens were dried in a ventilated oven set at 85 °C.

Finally, the leather-like material was separated from the fabric and subjected to visual evaluation and mechanical testing.

The modulus at 100 % of elongation was determined with a dynamometer at 5 kN (Zwick-Roell TC II Z005).

The flexing resistance (N° of Cycles) was determined with a Flexometer Bally type G 12/D (Giuliani Tecnologie s.r.l.) on the leather-like materials both soon after drying and after aging (Tropical Test) at 65 °C and 70 % of relative humidity for three weeks. The color alteration with aging was determined using the Gray Scale for Color Change Rating of a Datacolor SF600 Plus-CT spectrometer (5 = no difference; 1 = most difference).

The behavior of water-based compositions of Examples 1-11 in the coagulation step and the quality level of the obtained film, according to the scale described below, are shown in Table 6, together with the results of the instrumental analysis.

The data of Table 6 demonstrate that the water-based compositions of the invention not only show a better behavior in the coagulation step (in Table 6 YES means "ready coagulation", NO means "no coagulation"), but, also, a high overall quality of the obtained leather-like material.

All the polyether-based polyurethanes (UPET) ready coagulate forming a continuous film without defects, more or less soft and flexible or relatively rigid, with excellent mechanical resistance.

The combination of an UPET with a polyester-based polyurethane (UPES), Example 12, softens the coagulated substrate, making it particularly receptive to subsequent embossing treatments, which reach excellent results.

The presence of the polyester based polyurethane only slightly weakens the resistance of the product, but within entirely acceptable limits.

**Table 6**

| | | Coagul. | Material Quality** | Modulus (MPa) | N° Cycles | N° Cycles (aged) | Color Change |
|---|---|---|---|---|---|---|---|
| Ex. 1 | PU 1 | YES | xxxxx | 1,5 | 75000 | 75000 | 3/4 |
| Ex. 2 | PU 2 | YES | xxx | ND | ND | ND | ND |
| Ex. 3 | PU 3 | YES | xxx | 3,7 | 50000 | 50000 | 4 |
| Ex. 4 | PU 4 | YES | xxx | 3,5 | 50000 | 50000 | 4 |
| Ex. 5* | PU 5 | NO | ND | ND | ND | ND | ND |
| Ex. 6* | PU 6 | NO | ND | ND | ND | ND | ND |
| Ex. 7 | PU 7 | YES | xxxx | 2,7 | 75000 | 75000 | 4 |
| Ex. 8* | PU 8 | NO | ND | ND | ND | ND | ND |
| Ex. 9* | PU 9 | NO | ND | ND | ND | ND | ND |
| Ex. 10 | PU 10 | YES | xxxxx | 1,2 | 75000 | 50000 | 3 |
| Ex. 11 | PU 11 | YES | xxx | ND | ND | ND | ND |
| Ex. 12 | PU7/PU6*** | YES | xxxxxx | 1.6 | 75000 | 50000 | 2/3 |

| | | | | | | | |
|---|---|---|---|---|---|---|---|
| * Comparative ND = Not Determined ***= weight ratio = 80/20 **Legend: | | | | | | | |

| | |
|---|---|
| xxxxxx | Very soft and flexible, continuous film, with excellent embossability |
| xxxxx | Soft and flexible, continuous, embossable film |
| xxxx | Medium-soft continuous film |
| xxx | Rigid continuous film |

## Claims

1. Method of producing a leather-like material comprising the steps of:
A) impregnating a fibrous substrate with a water-based polyurethane composition containing from 12 to 45 % by weight (wt%) a carboxylated polyether diol-based polyurethane devoid of polyoxyethylene groups (UPET);
B) coagulating the polyurethane composition, by immersing at ambient temperature the impregnated fibrous substrate in a coagulation bath containing a water-soluble organic hydroxyacid;
C) washing the fibrous substrate bearing the coagulated polyurethane; and
D) drying the washed fibrous substrate bearing the coagulated polyurethane to obtain the leather -like material;
wherein the carboxylated polyether diol-based polyurethane devoid of polyoxyethylene groups is obtained by reaction of at least the following components:
a) from 10 to 40 wt% of at least one organic diisocyanate,
b) from 50 to 85 wt% of at least one polyether diol having a molecular weight from 500 to 3000 g/mol,
c) from 3.3 to 7 wt% of at least one diol having at least one carboxylic or carboxylate group and molecular weight from 100 to 300 g/mol,
d) from 0 to 5% of one or more polymeric diol different from the diol b) having a molecular weight from 500 to 3000 g/mol,
e) from 0 to 3 wt% of one or more polyol having at least 3 hydroxy groups,
f) from 0 to 3 wt% of a polyisocyanate having average functionality above 2,
g) from 0 to 12 wt% of a polyamine chain extender,
in such proportions that the molar ratio between the sum of the isocyanate groups of a) and f) and the sum of the hydroxy groups of b)-e) is between 1.25 and 1.9 and that b) represents at least 90% by weight of the sum of the components b)-e).

2. The method of producing a leather-like material according to claim 1, in which said UPET is obtained by reaction of at least the following components:
a) from 15 to 35 wt% of at least one organic diisocyanate,
b) from 60 to 80 wt% of at least one polyether diol having a molecular weight from 500 to 3000 g/mol,
c) from 3.3 to 7 wt% of at least one diol having at least one carboxylic or carboxylate group and molecular weight from 100 to 300 g/mol,
g) from 2 to 9 wt% of a polyamine chain extender.

3. The method of producing a leather-like material according to claim 1, in which the water-based polyurethane composition further contains a carboxylated polyester diol-based polyurethane devoid of polyoxyethylene groups (UPES), the ratio by weight between UPES and UPET ranging between 1:10 and 1:1.5, said UPES being obtained by reaction of at least the following components:
a') from 10 to 50 wt% of at least one organic diisocyanate,
b') from 40 to 85 wt% of at least one polyester diol having a molecular weight from 500 to 3000 g/mol,
c') from 3 to 9 wt% of at least one diol having at least one carboxylic or carboxylate group and molecular weight from 100 to 300 g/mol,
d') from 0 to 5 wt% of one or more polymeric diol different from the diol b') having a molecular weight from 500 to 3000 g/mol,
e') from 0 to 3 wt% of one or more polyol having at least 3 hydroxy groups,
f') from 0 to 3 wt% of a polyisocyanate having average functionality above 2,
g') from 0 to 12 wt% of a polyamine chain extender,
in such proportions that the molar ratio between the sum of the isocyanate groups of a') and f') and the sum of the hydroxy groups of b')-e') is between 1.0 and 2.0 and that b') represents at least 90% by weight of the sum of the components b')-e').

4. The method of producing a leather-like material according to any of claims 1 or 2, in which at least 50 wt% of the components of the UPET are bio-based.

5. The method of producing a leather-like material according to claim 3, in which at least 50 wt% of the UPET and of the UPES are bio-based.

6. The method of producing a leather-like material according to claim 3, in which the ratio by weight between the UPES and the UPET ranges between 1:6 and 1:2.

7. The method of producing a leather-like material according to claim 1, in which the water-soluble organic hydroxy-acid of step B) is an alpha-hydroxy-acid.

8. The method of producing a leather-like material according to claim 7, in which the alpha-hydroxy-acid is citric acid.

9. The method of producing a leather-like material according to claim 1 in which in step A) the fibrous substrate is impregnated with the water-based polyurethane composition by dipping.

10. The method of producing a leather-like material according to claim 3 in which the polyether diol b) is biobased poly(1,3-propandiol) with molecular weight between 1000 and 2000 g/mol, poly(tetramethylene glycol) with molecular weight 2000 g/mol, polyoxypropylene diol with molecular weight 2000 g/mol, or mixtures thereof.
